(19) Europäisches Patentamt
European Patent Office
Office européen des brevets

(11) EP 0 738 293 B1

(12) **EUROPEAN PATENT SPECIFICATION**

(45) Date of publication and mention of the grant of the patent:
**21.04.1999 Bulletin 1999/16**

(21) Application number: **94907721.8**

(22) Date of filing: **09.02.1994**

(51) Int Cl.[6]: **C08J 9/00**

(86) International application number:
**PCT/NO94/00034**

(87) International publication number:
**WO 94/18266 (18.08.1994 Gazette 1994/19)**

# (54) METHOD FOR THE PRODUCTION OF HARD PVC FOAM

VERFAHREN ZUR HERSTELLUNG VON HARTEM PVC-SCHAUM

PROCEDE DE PRODUCTION DE MOUSSE PVC DURE

(84) Designated Contracting States:
**AT BE CH DE DK ES FR GB GR IE IT LI LU MC NL PT SE**

(30) Priority: **11.02.1993 NO 930492**

(43) Date of publication of application:
**23.10.1996 Bulletin 1996/43**

(73) Proprietor: **DYNOPLAST AS ALESUND**
**N-6022 Alesund (NO)**

(72) Inventors:
- **REDFORD, Keith**
  **N-1481 Hagan (JP)**
- **TELJE, Line**
  **N-0464 Oslo (NO)**
- **STORI, Aage**
  **N-0583 Oslo (NO)**
- **HOLM, Kjetil, Houg**
  **N-0368 Oslo (NO)**
- **JÖRGENSEN, Arvid**
  **N-6019 Iesund (NO)**
- **GRÖVDAL, Jarle**
  **N-6320 Isfjorden (NO)**

(74) Representative: **Dealtry, Brian**
**Eric Potter Clarkson,**
**Park View House,**
**58 The Ropewalk**
**Nottingham NG1 5DD (GB)**

(56) References cited:
**GB-A- 985 461** **GB-A- 1 005 465**

- **PATENT ABSTRACTS OF JAPAN, Vol. 14, No. 299, C-733; & JP,A,2 097 535, (IKEDA BUSSAN CO LTD), 10 April 1990.**
- **DIALOG INFORMATION SERVICES, File 351, World Patent Index, Dialog Accession No. 009559331, (KANF KANEKA CORP), "Rigid Expanded Body for Building Insulating Material - Obtd. by Expanding Compsn. of Vinyl Chloride Type Resin, Dinitrosopentamethylene Tetramine, Monohydric Alcohol and Solvent"; & JP,A,5 170 963, 09-07-93, 9332.**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 738 293 B1

## Description

The invention concerns a method for the production of hard PVC foam, as specified in the preliminary section of patent claim 1.

Hard polymer foams, especially hard PVC foams, are materials with a wide range of potential applications. They are, for example, currently used in buoys and load bearing constructions.

In the production of hard PVC foam particulate PVC is usually mixed at low temperature with stabiliser, plasticiser, blowing agent and a poly- or diisocyanate compound to yield a viscous material consisting of solid PVC particles dispersed in a liquid phase (plastisol). The mixture is then transferred to an appropriate mould, e.g. a closed cylinder, and is heated under high pressure to a temperature at which the mixture approaches homogeneity and the blowing agent decomposes. The material is subsequently cooled and transferred to a new mould where it is then heated to a temperature at which it is sufficiently softened for the dispersed gas from the blowing agent to be able to expand the material to fill the mould. The expanded material has a rubbery consistency with a glass transition temperature (Tg) of approx. 20°C. To produce a hard foam the material must be cured, i.e. the isocyanate compound must be crosslinked in the expanded foam in order to establish an essentially homogeneous three dimensional network mixed with the PVC component. To initiate the cure process the material must be exposed to water, which initiates the crosslinking reaction according to the reaction scheme given below. In step 1 water reacts with the isocyanate group to produce $CO_2$ gas and an amine group on the diisocyanate compound.

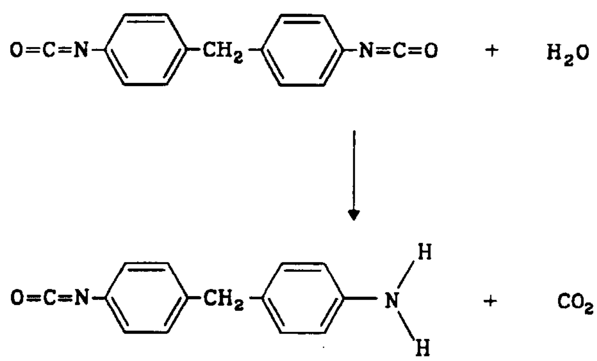

The next stage is the reaction of the amine group with an isocyanate group from another molecule to produce a chain structure. The NH group in the -NHCONH- linkage reacts further with another isocyanate group to form a crosslinked structure:

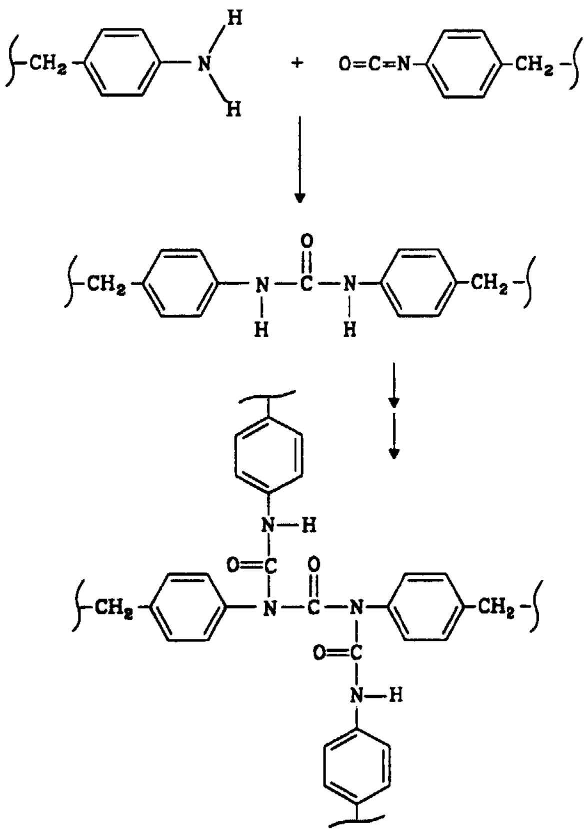

Today's technology is dependent upon the diffusion of water into the material. The cure process is performed by storing the expanded material at high temperature and humidity for long periods, for example 2 weeks at 90°C and relative humidity 100%, to provide water for the crosslinking stage. The thicker and more compact the material is, the longer the cure time needed to produce a commercially acceptable product. The reason being that the expanded material has a closed cell structure and therefore a low water permeability, thus the diffusion of water into the inner parts of the expanded polymeric material is a slow process. The length of the cure time varies with temperature, humidity, material thickness and material density, thus sheet products of the foam are in practice limited to certain thicknesses. Due to the length of cure time required thicker products must be produced as laminates. For example sheet products of thickness greater than 50mm from a material of density 0.2kg/litre must in practice be produced as laminates. The cure process must be fully completed before further processing can occur.

With today's technology the production of these hard PVC foams is both time and energy consuming and also requires a large working space. It is therefore an expensive process.

The object of the invention is to develop a simpler procedure for the production of hard PVC foam which reduces or eliminates the above mentioned problems and enables the production of foam with essentially unlimited dimensions.

The invention is presented in the characterising section of patent claim 1. Further advantageous features of the invention appears in the dependent claims. According to the current invention foamed PVC/ isocyanate plastics can be cured by the addition of a water generating mono- or poly-alcohol with the formula $R(OH)_n$, where R can be saturated or unsaturated, can include hetero atoms, and can be alkyl, cycloalkyl, aryl-alkyl or aryl, and n is an integer greater than zero. In association with the expansion stage the alcohol frees water to initiate the isocyanate crosslinking reaction and hardens the material. This results in a significant reduction in the need for water penetration as described earlier.

As described earlier, particulate PVC is mixed at low temperature with stabiliser, plasticiser/solvent, blowing agent, a poly- or diisocyanate compound and an alcohol to produce a viscous mass consisting of solid PVC particles dispersed in a liquid phase, with possible additional additives. The mixture is then transferred in the first step to a suitable mould, e.g. a closed cylinder. The mould should be 100% filled by the mixture. It is then heated under high pressure, e.g. 200 bar, until the mixture approaches homogeneity, the viscosity increases and the blowing agent decomposes. A typical temperature would be approx. 165 to 170°C, but can vary depending upon the type and quantity

of diisocyanate and plasticiser/solvent used, and the dimensions of the material itself. The material is subsequently cooled and in step 2 transferred to a new and larger mould and heated to a temperature, e.g. 100°C, at which the material softens sufficiently for the dispersed gas from the blowing agent to expand it and fill the form. Simultaneously a three dimensional network of diisocyanate bonds is formed as a result of the water generation from the additional alcohol. This second heating stage can be preferentially performed by submerging the material in water heated approx. to 100°C, or in another medium which ensures good heat transfer to the material to be expanded and cured, e.g. in a press with heating elements for the production of sheets.

The intermediate cooling stage described above is however not necessary in this procedure. The initial heating stage and the subsequent expansion stage can be carried out in the same mould by altering the size and geometry of the mould in the second stage.

The density of the expanded material can be adjusted according to requirement by varying the size of the expansion mould in relation to the material to be blown and by adjusting the quantity and type of blowing agent used.

The alcohol in the second stage will provide the formation of water which is more or less evenly distributed within the PVC/isocyanate mixture. The water reacts with the isocyanate group on the diisocyanate compound according to the previously described reaction scheme to produce a reactive amine group and carbon dioxide. The NH groups on the urea group which is formed react further with isocyanate groups on other diisocyanate molecules and in this way create a crosslinked system which strengthens the whole construction.

By this method it is possible to obtain an adequately cured structure in a very short time compared to previously reported cure techniques, and the polymer foam can be cut to the required dimensions immediately after production with no danger of the foam continuing to expand. The glass transition temperature of a newly produced polymer foam lies typically in the region 30-60°C, and the storage modulus increases by a factor of 10 at room temperature. The crosslinked polymer foam will however continue to cure, and will finally achieve a glass transition temperature $T_g$ of around 70°C. The duration of this after cure varies with geometry, humidity and temperature. For some products the after cure is not necessary.

Without being restricted to a specific theory it is assumed that the water in the cure stage is formed by acid catalysed or acid induced dehydration of the additional alcohol compound. The catalyst, HCl, is generated from PVC under the influence of heat, which is indicated by a pale pink colouration of the heat/pressure treated polymer/isocyanate material, probably caused by conjugated double bonds in the PVC chain after the generation of HCl.

In theory any alcohol can be used in this invention. However, certain alcohols are preferential for reasons which will now be discussed in detail. The acid catalysed generation of water by tertiary-, secondary- and primary alcohols occurs as given in the following reaction schemes, here using t-butanol, isopropanol and n-butanol respectively.

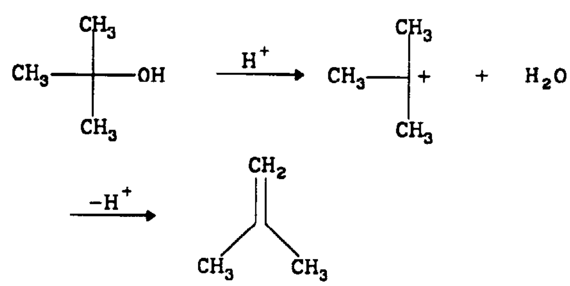

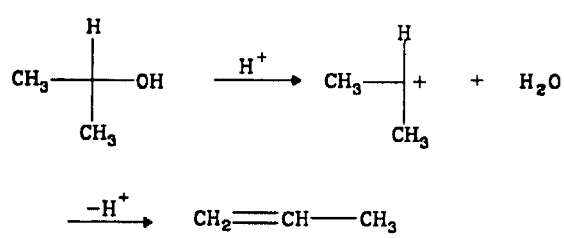

$$CH_3CH_2CH_2CH_2OH \xrightarrow{H^+} CH_3CH_2CH_2CH_2^+ \xrightarrow{-H^+} CH_3CH_2CH{=}CH_2$$

The reactivity rates of dehydration decrease in the order tertiary > secondary > primary. Tertiary alcohols are the preferred choice as the dehydrated tertiary alkyl ion is more stable than, for example, the dehydrated primary alkyl ion, but even primary alcohols have been shown to have some effect according to the invention. Alcohols will however participate in a competing reversible reaction with isocyanate compounds to form polyurethane linkages. The reactivity for these competing reactions decreases in the order primary > secondary > tertiary. The reaction scheme for this competing reaction is generally given as:

$$R\text{-}N{=}C{=}O + R'OH \rightleftarrows R\text{-}NH\text{-}C(O)\text{-}OR'$$

At high temperature, however, the reaction reverses liberating the alcohol for the water generating reaction.

Other alcohols which are preferred are those in which the alkyl cation undergoes resonance stabilisation. Examples are given below of water generation from phenylmethanol, 2-propene-1-ol and 2-butene-1-ol:

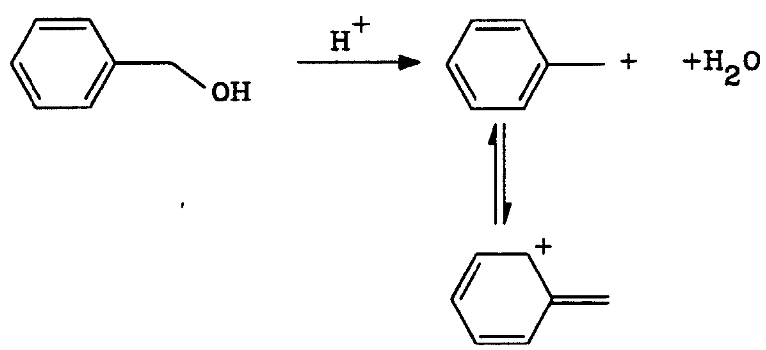


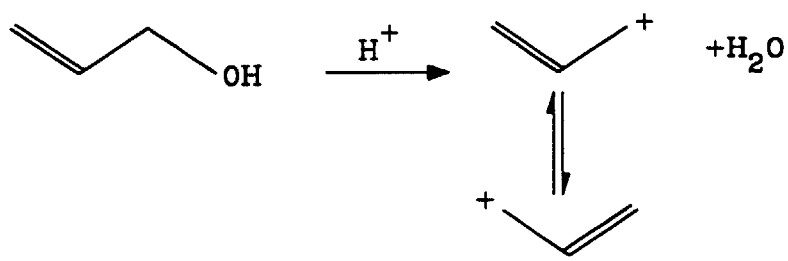

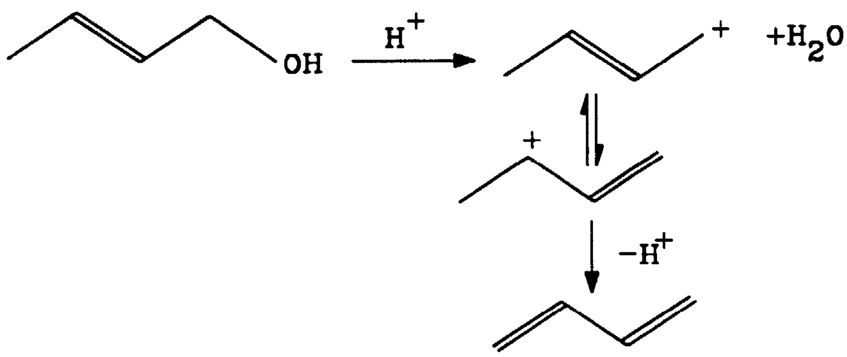

All types of alcohol, including diols, triols and polymeric alcohols, may be used in this new method. Other examples of preferred alcohols are 2-pentene-1-ol, 2-pentene-3-ol, and other alkenyl alcohols where C=C linkages are on the neighbouring atom to the carbon which binds the OH group. Phenylmethanol and alkylarylmethanols are also favourable because of their resonance stabilised ions after dehydration. t-Butanol is however the most preferred because of it's availability and cost, and it's relatively good alkyl ion stability and relatively low reactivity in polyurethane type reactions.

The amount of alcohol necessary to obtain optimal results is dependent on the speed of water generation. This reaction is again dependent upon the structure of the alcohol and the concentration of $H^+$. The maximum amount of alcohol which can be used to obtain optimal effect is dependent upon the degree of water generation from the alcohol. For an ideal alcohol which is 100% dehydrated at the end of the reaction it is assumed that not more than equimolar quantities of alcohol to isocyanate groups should be used. Further addition of alcohol to exceed this concentration can result in a reduction in crosslinking density.

The following, non-limiting examples are given to illustrate the procedure for the production of hard PVC foam, by the addition of varying amounts of alcohols of differing structures. All the components are given in weight relative to 100 parts PVC.

**Example 1**

The aim of this example is to illustrate the effect of the addition of t-butanol on the materials mechanical properties immediately after expansion, i.e. without external exposure to water.

At room temperature 100 parts PVC were stirred together with 5 parts blowing agent in the form of azo-bis-isobutyronitrile, 3.25 parts white lead stabiliser, 50 parts methylenediphenyl-diisocyanate (MDI), 18 parts tetrapropylbenzene as plasticiser/solvent and 2 parts t-butanol for approx. 5 minutes to produce a viscous material with evenly distributed solid PVC particles.

A closed steel cylinder of length 200mm and diameter 55mm, fitted with heating and cooling elements was then filled completely with this viscous material. The inner cylinder wall was heated to 180 C. The sample was heated for approximately 67.5 minutes until the core temperature of the sample was approx. 170°C, measured by a thermocouple placed in the sample from the outside of the closed steel cylinder. The pressure closing the cylinder was held constant at approx. 200 bar. The resulting material, with the dimensions of the steel cylinder and a density of approx. 1.15 kg/litre, was then cooled to approx. 20°C over a period of 70 minutes. The sample was then cut to a length of 150mm and transferred to an expansion tube of diameter 100mm and length 200mm, which was placed in a vessel containing boiling water. The material was held submerged within the expansion cylinder in the boiling water for approx. 3 hours in order to expand and cure it. The resulting expanded and partially hardened polymer foam which now completely filled the expansion cylinder had a density of approx. 0.26kg/litre. The material was immediately cooled in cold water, dried and cut up into test pieces for the evaluation of mechanical properties, as described in detail below.

In addition a reference sample, without alcohol, was produced by increasing the proportion of solvent/plasticiser to 20 parts by weight, the other quantities remaining unaltered. In order to obtain an outline of how the mechanical properties of the finished material vary with the amount of alcohol added, a series of samples was produced with increasing t-butanol content and corresponding decreasing solvent/plasticiser content (Table 1, below).

Mechanical testing of the samples was carried out using a dynamic mechanical thermal analysis (DMTA) instrument (Rheometrics system 4 rheometer). The samples were cut into rectangular pieces of dimension 60 x 12 x 6 mm, and were stored in a dry atmosphere prior to testing. During testing the samples were deformed 0.5 % at a frequency of 1 Hz. The storage modulus (G') and loss modulus (G") were measured at 4° intervals over a temperature

range from -20°C to +80°C. Tanδ was calculated from the ratio G"/G'. The glass transition temperature, Tg, is defined as the temperature where Tanδ is at a maximum.

The glass transition temperature, Tg, is used here as an indication of the temperature at which the material softens, and the value of G' at 20°C as an indication of the stiffness of the sample at room temperature. The measurements of Tg are independent of the sample density, the storage modulus G' however, is density dependent.

The glass transition temperature, Tg, can be used as an indication of the how easy the foam will be to handle after expansion. A sample having a Tg of 50°C will be completely stable when cut and will maintain it's shape.

The results from this series of samples are given in Table 1 below for differing amounts of t-butanol.

Table1.

| **Effect of t-butanol on mechanical properties Material density: 0.26 ± 0.02 kg/l.** | | | | |
|---|---|---|---|---|
| *Solvent* | *t-butanol* | *$T_g$(°C)* | *G' 20°C (MPa)* | *G' 40°C (MPa)* |
| 20 | 0 | 23 | 2.7 | 0.3 |
| 18 | 2 | 28 | 8.6 | 0.8 |
| 16 | 4 | 28 | 6.5 | 0.6 |
| 15 | 5 | 33 | 12.5 | 0.3 |
| 14 | 6 | 35 | 24.4 | 1.6 |
| 13.5 | 6.5 | 38 | 26.2 | 2.4 |
| 13 | 7 | 44 | 34.6 | 4.5 |
| 12.5 | 7.5 | 40 | 32.1 | 2.7 |

As shown in the table above, the glass transition temperature increases almost linearly with increasing t-butanol content. The storage modulus G' measured at 20°C is almost three times the value of the reference sample at 2 parts by weight t-butanol, and for a t-butanol content of 7.5 parts by weight the value is almost a factor of ten greater. Corresponding increases are observed for G' measured at 40°C. This is a clear indication that the mechanical properties of the polymer foam immediately after expansion are considerably improved by the addition of a tertiary alcohol to the initial mixture. Corresponding values are observed for other tertiary alcohols; see example 2.

**Example 2**

The aim of this example is to illustrate the effect of the addition of t-amylalcohol, i.e. $CH_3CH_2C(CH_3)_2OH$ on the mechanical properties of the material immediately after expansion, i.e. without exposure to external water.

The results from this experimental series are given in Table 2 below for varying quantities of t-amylalcohol.

Table2.

| **Effect of t-amylalcohol on material properties Material density: 0.26 ± 0.02 kg/l.** | | | | |
|---|---|---|---|---|
| *Solvent* | *t-amyl-OH* | *$T_g$(°C)* | *G' 20°C (MPa)* | *G' 40°C (MPa)* |
| 20 | 0 | 23 | 2.7 | 0.3 |
| 18 | 2 | 27 | 22.8 | 1.2 |
| 16 | 4 | 33 | 27.4 | 2.1 |
| 15 | 5 | 31 | 15.9 | 1.1 |
| 14 | 6 | 39 | 20.0 | 1.1 |

As with t-butanol in example 1 the use of t-amylalcohol results in a marked improvement of the glass transition temperature and storage modulus.

**Example 3**

This example illustrates the effect of the addition of an unsaturated secondary alcohol on the mechanical properties of the material immediately after expansion, i. e. without external exposure to water.

The procedure outlined in Example 1 was again used, this time using isopropanol in the quantities given below. The results from this experimental series are given in table 3 below for differing quantities of isopropanol.

Table 3.

| Effect of isopropanol on the mechanical properties Material density: 0.26 ± 0.02 kg/l. | | | | |
|---|---|---|---|---|
| *Solvent* | *iso-propanol* | *$T_g$(° C)* | *G' 20° C (MPa)* | *G' 40° C (MPa)* |
| 20 | 0 | 23 | 2.7 | 0.3 |
| 18 | 2 | 23 | 5.4 | 0.6 |
| 16 | 4 | 27 | 8.1 | 0.5 |
| 15 | 5 | 29 | 14.6 | 0.7 |
| 14 | 6 | 27 | 8.7 | 0.8 |

As expected the increase in glass transition temperature when using a secondary alcohol is less marked than when using a tertiary alcohol, but the increase is nevertheless significant. When using 5 parts by weight of isopropanol the storage modulus at 20°C increases by 440% compared with the reference sample, while the increase in the storage modulus at 40°C is somewhat less. Thus it is possible to obtain a marked improvement in mechanical properties with a very short cure time using a secondary alcohol.

**Example 4**

This example illustrates the effect of the addition of different types of alcohols on the mechanical properties of the material immediately after expansion, i.e. without exposure to external water. The alcohols used are phenylmethanol, as an example of an arylalcohol, and 2-propene-1-ol, 2-butene-1-ol and n-butanol as examples of primary alcohols.

A series of experiments was performed using the same methods for production and material testing as outlined in Example 1, but using the above named alcohols in the proportion 5 parts by weight per 100 parts PVC. The results from this series of experiments are given in Table 4 below.

Table 4.

| Effect of different alcohols on mechanical properties Material density: 0.26 ± 0.02 kg/l. | | | | |
|---|---|---|---|---|
| *Solvent* | *Alcohol* | *$T_g$(° C)* | *G' 20° C (MPa)* | *G' 40° C (MPa)* |
| 15 | phenylmethanol | 29.7 | 13.5 | 0.99 |
| 15 | 2-propenel-ol | 32.8 | 24.8 | 1.16 |
| 15 | 2-butenel-ol | 25.5 | 7.7 | 0.8 |
| 15 | n-butanol | 24.7 | 6.2 | 0.5 |
| 20 | - | 23 | 2.7 | 0.3 |

From the above table it is clear that all of the alcohols show an effect when compared with PVC foam without alcohol. Phenylmethanol and 2-propene-1-ol as expected have a greater effect than n-butanol. 2-butene-1-ol however shows a surprisingly lower modulus than 2-propene-1-ol. This alcohol should have a similar effect to 2-propene-1-ol due to the resonance stabilised alkyl ion. The lower modulus is assumed to be caused by the butadiene polymerising, whereas the product from 2-propene-1-ol does not polymerise. The polymer formed from butadiene has a low glass transition temperature and has a softening effect on the PVC foam. Such an effect can however be desirable for certain applications, e.g. where impact resistance is required at low temperature.

**Example 5**

This example covers the analysis of the finished cured product prepared in accordance with the invention and using prior art (without the use of alcohol), the purpose being to verify the formation of water formation from the additional alcohol.

Gas chromatography combined with mass spectroscopy was used to analyse the gaseous content of the pores of three different finished cured foam products. The method of analysis "head-space GC-MS" revealed that in foam to which t-butanol had been added 2-methylpropene was present in the pores. This compound is formed from t-butanol by the elimination of water. No traces of t-butanol were detected in the pores. For foamed products to which t-amylalcohol had been added two compounds from the alcohol were detected in the pores, these were probably 2-methyl-1-butene, 2-methyl-2-butene or the cyclic compound 1,1-dimethylcyclopropane. These three can all be

formed from t-amyl alcohol during the elimination of water. No traces of t-amyl alcohol were detected.

None of the above mentioned compounds were detected in the pores of foam products to which alcohol had not been added. These analyses showed that the gaseous content of the pores of foam materials based on all possible variations of the recipe contained degradation products from the blowing agent. This was as expected.

Control analyses of t-butanol and t-amylalcohol were performed and showed that the alcohols had other peaks on the GC and a different fragmentation pattern in MS than the respective observed degradation products. This confirms that the compounds detected in the pores were the identified alkenes and that the peaks did not result from the alcohols themselves eliminating water during analysis.

Procedure for analysis

Gas samples were taken from the pores in the foamed materials by puncturing several foam cells with a syringe needle and then transferring the gas to a capillary syringe. The gas (1 ml) was then injected into a GC column. The different compounds in the sample were separated by distillation according their boiling points. Each compound was then ionised in the MS chamber and fragmented. The compounds were identified from the boiling point and fragmentation pattern. The following samples were analysed.

<u>Sample A:</u>

A PVC foam was produced in accordance with known techniques, without the use of alcohol. A GC analysis resulted in peaks at 343-347, 392-396 and 1181-1185 seconds which were N containing compounds from the blowing agent, AIBN. The peaks which appeared at 1400-2200 seconds were from different aromatic compounds. These peaks were present in all the samples analysed.

<u>Sample B</u>

A PVC foam was produced in the same way as sample A but with the addition of t-butanol in accordance with the invention. A GC analysis produced a large peak at 111-115 seconds in addition to peaks at 343-347, 392-396, 1181-1185 and 1400-2200 seconds. The peak at 111-115 seconds was identified as 2-methyl propene, which is produced by the elimination of water from t-butanol.

A MS analysis resulted in peaks at 39, 41 and 56 Daltons (D), illustrated by the fragmentation pattern below:

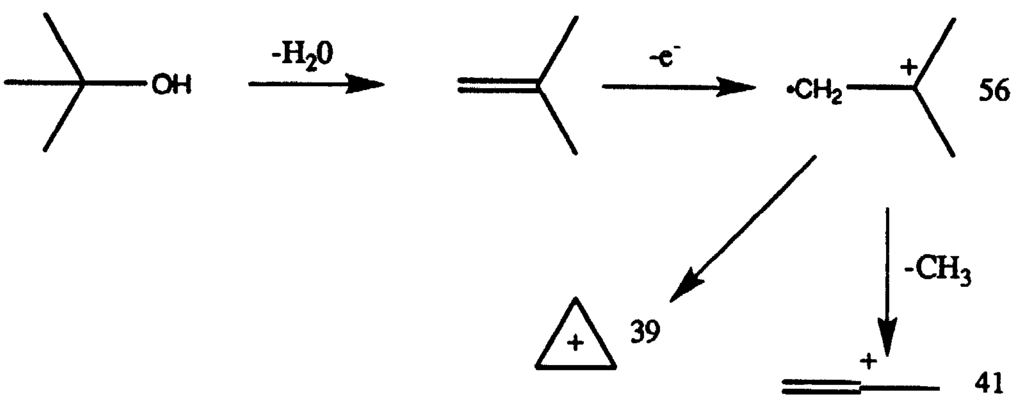


<u>Sample C:</u>

A PVC foam was produced with the same composition as sample B above, but with the addition of t-amyl alcohol instead of t-butanol. A GC analysis produced small peaks at 343-347, 392-396,1181-1185 and 1400-2200 seconds from the blowing agent and aromatic compounds, together with two large peaks at 183-187 and 211-215 seconds from the alcohol.

The probable fragmentation pattern for the peak at 183-187 seconds is given below.

The fragmentation of 2-methyl-1-propene and 2-methyl-2-propene are given in the figure. The compound responsible for the observed fragmentation pattern could also be 1,1 dimethylcyclopropane.

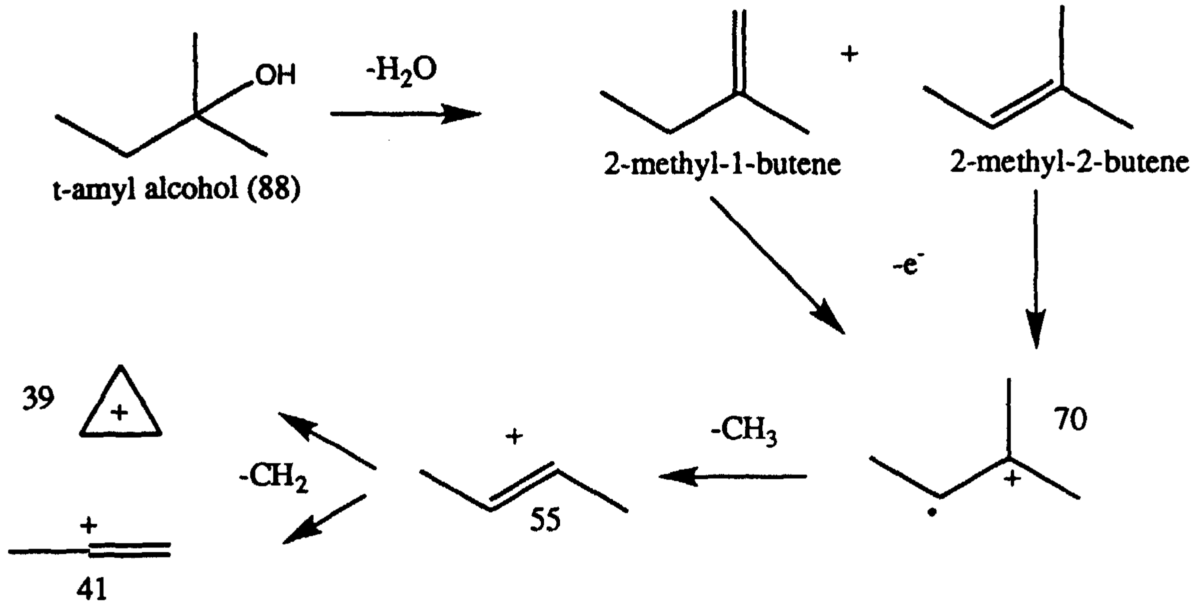


The fragmentation of the peak at 211-215 seconds is more uncertain. It is assumed that the molecular ion is at 83 D, otherwise the spectrum consisted of the same pattern of ions at 70, 55, 41, and 39D . The instrument used for the analysis cannot give a definite analysis of the molecular ion. The molecular ion M+ is possibly at 70D for this compound, and then with the same fragmentation pattern as the compound at 183-187 seconds.

From the results of the above analyses it can be concluded that during the heating of the PVC plastisol water is eliminated from the tertiary alcohols t-butanol and t-amyl alcohol. The resulting alkenes can be detected in the gaseous pores of the foamed material.

**Claims**

**1.** Method for the production of hard PVC foam, where

a) an initial mixture containing PVC, a blowing agent, stabilisor, solvent/plasticiser, a poly- or diisocyanate compound, and optionally other additives, is produced;
b) the mixture is transferred to a mould and heated under pressure to produce a homogenous material in which the blowing agent decomposes;
c) the material is subsequently cooled to approximately room temperature; and
d) the material is transferred to a suitable form, possibly surrounded by a fluid medium for improved heat transfer from the surroundings to the material, at a temperature close to its softening temperature; or the material is expanded in the same mould as in step b) above, or is allowed to expand freely,

**characterised** by the addition to the initial mixture in step a) of a water-generating mono-alcohol or poly-alcohol having the formula $R(OH)_n$, where R may be saturated or unsaturated, optionally heteroatom containing, alkyl, cycloalkyl, arylalkyl, aryl, and n is a whole number greater than zero.

**2.** Method in accordance with claim 1,
**characterised** by: selecting R in the form of tertiary alkyl, as in t-butanol or t-amylalcohol

**3.** Method in accordance with claim 1,
**characterised** by: selecting R in the form of alkenyl, as in 2-butene-1-ol or 2-pentene-1-ol.

**4.** Method in accordance with claim 1,
**characterised** by: selecting R in the form of secondary alkyl, as in isopropanol, isobutanol, or isopentanol.

**5.** Method in accordance with claim 1,
**characterised** by: selecting R in the form of arylmethyl, as in phenylmethanol; or alkylarylmethanol.

6. Method in accordance with claim 1,
**characterised** by: selecting R in the form of primary alkyl, as in ethanol, or propanol.

7. Method in accordance with one of the claims 1 to 6,
**characterised** by: adding the alcohol in up to equimolar quantities in relation to the isocyanate groups, calculated on the basis of an ideal alcohol.

## Patentansprüche

1. Verfahren zur Herstellung von PVC-Schaumstoff, bei welchem

   a) ein Ausgangsgemisch mit PVC, einem Treibmittel, einem Stabilisator, einem Lösungsmittel/Plastifizierungsmittel, einer Poly- oder Diisocyanatverbindung und ggf. sonstigen Zusätzen zubereitet,
   b) das Gemisch zur Gewinnung eines homogenen Materials, in welchem sich das Treibmittel zersetzt, in eine Form überführt und (dort) unter Druck erwärmt,
   c) danach das Material etwa auf Raumtemperatur abgekühlt und
   d) das Material bei einer Temperatur nahe seiner Erweichungetemperatur in eine ggf. von einem fließfähigen Medium zur verbesserten Wärmeübertragung aus der Umgebung auf das Material umgebene geeignete Form übertragen oder in derselben Form wie in der vorhergehenden Stufe b) expandiert oder sich frei ausdehnen gelassen werden, dadurch gekennzeichnet, daß dem Ausgangsgemisch in Stufe a) ein Wasser erzeugender Mono- oder Polyalkohol der Formel $R(OH)_n$ mit R gleich einem gesättigten oder ungesättigten, ggf. heteroatomhaltigen Alkyl, Cycloalkyl, Arylalkyl oder Aryl und n gleich einer ganzen zahl über 0 zugesetzt wird.

2. Verfahren nach Anspruch 1, dadurch gekennzeichnet, daß R in Form eines tertiären Alkyls, wie in tert.-Butanol Oder tert.-Amylalkohol, ausgewählt wird.

3. Verfahren nach Anspruch 1, dadurch gekennzeichnet, daß R in Form eines Alkenyls, wie in 2-Buten-1-ol oder 2-Penten-1-ol, ausgewählt wird.

4. Verfahren nach Anspruch 1, dadurch gekennzeichnet, daß R in Form eines sekundären Alkyls, wie in Isopropanol, Isobutanol oder Isopentanol, ausgewählt wird.

5. Verfahren nach Anspruch 1, dadurch gekennzeichnet, daß R in Form eines Arylmethyls, wie in Phenylmethanol oder Alkylarylmethanol, ausgewählt wird.

6. Verfahren nach Anspruch 1, dadurch gekennzeichnet, daß R in Form eines primären Alkyls, wie in Ethanol oder Propanol, ausgewählt wird.

7. Verfahren nach Anspruch 1 bis 6, dadurch gekennzeichnet, daß der Alkohol in bis zu äquimolaren Mengen in Bezug auf die Isocyanatgruppen, berechnet auf der Basis eines idealen Alkohols, zugesetzt wird.

## Revendications

1. Procédé pour fabriquer une mousse de PVC dure, dans lequel

   a) on prépare un mélange initial contenant du PVC, un agent porogène, un stabilisant, un solvant/plastifiant, un composé poly- ou diisocyanate et, facultativement, d'autres additifs ;
   b) le mélange est transféré dans un moule et chauffé sous pression pour produire une matière homogène dans laquelle l'agent porogène se décompose ;
   c) la matière est ensuite refroidie approximativement à température ambiante ; et
   d) la matière est transférée dans un moule approprié, éventuellement entourée par un milieu fluide pour améliorer le transfert de chaleur de l'environnement à la matière, à une température proche de sa température de ramollissement ; ou la matière est expansée dans le même moule que dans l'étape b) ci-dessus, ou on la laisse se dilater librement,

   caractérisé par l'addition au mélange initial de l'étape a) d'un monoalcool ou polyalcool générant de l'eau,

ayant la formule $R(OH)_n$, où R peut être un groupe alkyle, cycloalkyle, arylalkyle, aryle saturé ou insaturé, contenant facultativement un hétéroatome, et n est en nombre entier supérieur à zéro.

**2.** Procédé selon la revendication 1, caractérisé par le choix de R sous la forme d'un groupe alkyle tertiaire, comme dans le t-butanol ou l'alcool t-amylique.

**3.** Procédé selon la revendication 1, caractérisé par le choix de R sous la forme du groupe alcényle, comme dans le 2-butène-1-ol ou le 2-pentène-1-ol.

**4.** Procédé selon la revendication 1, caractérisé par le choix de R sous la forme d'un groupe alkyle secondaire, comme dans l'isopropanol, l'isobutanol ou l'isopentanol.

**5.** Procédé selon la revendication 1, caractérisé par le choix de R sous la forme d'un groupe arylméthyle, comme dans le phénylméthanol ; ou un alkylarylméthanol.

**6.** Procédé selon la revendication 1, caractérisé par le choix de R sous la forme d'un groupe alkyle primaire, comme dans l'éthanol ou le propanol.

**7.** Procédé selon l'une quelconque des revendications 1 à 6, caractérisé par l'addition de l'alcool jusqu'à des quantités équimolaires par rapport aux groupes isocyanate, calculée sur la base d'un alcool idéal.